# EUROPEAN PATENT APPLICATION

(11) **EP 4 548 823 A1**
(43) Date of publication of application: **07.05.2025**
(21) Application number: 24210329.9
(22) Date of filing: 01.11.2024
(51) Int. Cl.: A47J 37/06, A47J 36/32

(54) **AIR FRYER WITH GOOD SAFETY FEATURES**

(30) Priority: 03.11.2023 CN 202322979996 U; 29.11.2023 CN 202323244689 U
(71) Applicant: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, 315000 Ningbo, Zhejiang (CN); LUO, Zian, Ningbo, Zhejiang (CN); YU, Weikun, Ningbo, Zhejiang (CN); HUO, Zhian, Ningbo, Zhejiang (CN); ZHU, Mingjia, Ningbo, Zhejiang (CN)
(74) Representative: Meyer-Dulheuer MD Legal Patentanwälte PartG mbB

(57) **Abstract**

The present disclosure relates to an air fryer, and more particularly to an air fryer with good safety features. An air fryer with good safety features, including a body, a cooking cavity located within the body, the body having a top opening connected to the cooking cavity at the top, and a lid provided at the top opening to open and close the top opening; the body having a side opening connected to the cooking cavity on the side, and a side cover provided at the side opening to open and close the side opening, wherein the body has a linkage control system inside, the linkage control system being electrically connected to the control circuit inside the body; the linkage control system is also suitable for transmission cooperation with the lid and the side cover, when the lid and the side cover close the top opening and the side opening, the linkage control system is conductive with the control circuit of the body; when either of the top opening and the side opening is in an open state, the linkage control system is disconnected from the control circuit of the body.

## Description

### CROSS-REFERENCE TO RELATED APPLICATIONS

The present disclosure claims the priority of Chinese patent application No. 202322979996.2, filed to the CNIPA on November 3, 2023 and entitled "Air Fryer with Good Safety Features", and Chinese patent application No. 202323244689.6, filed to the CNIPA on November 29, 2023 and entitled "Air Fryer with Adjustable Exhaust", the entire contents of which are incorporated by reference in the present disclosure.

### TECHNICAL FIELD

The present disclosure relates to the technical field of kitchen appliances and cooking appliances, particularly to an air fryer, and more particularly to an air fryer with good safety features.

### BACKGROUND

With the improvement of people's living standards, the requirements for household appliances are also increasing. To meet customer needs, a type of double-door air fryer has emerged in the market, which has a cooking cavity with a top opening and a side opening, the top opening is equipped with an openable lid, and the side opening is equipped with a side cover that can be flipped to open and close the side opening. By setting the openable lid and the side cover on the air fryer, it is not only convenient for taking out the cooked food but also convenient for users to add food and seasonings to the cooking cavity during cooking. Although this type of air fryer is more convenient to use, opening the lid and/or side cover rashly during cooking may cause user scalding. At the same time, there may also be situations where the air fryer starts before the side cover and/or lid are closed, resulting in poor safety and poor user experience.

### SUMMARY

In order to solve the above at least one technical problem, the present invention discloses the following technical solutions:
An air fryer with good safety features, including a body, a cooking cavity located within the body, the body having a top opening connected to the cooking cavity at the top, and a lid provided at the top opening to open and close the top opening; the body having a side opening connected to the cooking cavity on the side, and a side cover provided at the side opening to open and close the side opening, wherein the body has a linkage control system inside, the linkage control system being electrically connected to the control circuit inside the body; the linkage control system is also suitable for transmission cooperation with the lid and the side cover, when the lid and the side cover close the top opening and the side opening, the linkage control system is conductive with the control circuit of the body; when either of the top opening and the side opening is in an open state, the linkage control system is disconnected from the control circuit of the body.

In one or more embodiments, the linkage control system including a micro-switch component, a first transmission mechanism, and a second transmission mechanism, one end of the first transmission mechanism and the second transmission mechanism is adapted to cooperate with the micro-switch component, and the other end is adapted to extend to the top opening and the side opening respectively, to cooperate with the lid and the side cover.

In one or more embodiments, the edge of the side opening is provided with a slot, the second transmission mechanism is adapted to extend into the slot, the side cover is provided with a lifting rod matching the slot, when the side cover is flipped to close the side opening, the lifting rod is adapted to extend into the slot and cooperate with the second transmission mechanism.

In one or more embodiments, the edge of the top opening is provided with a limiting groove, the first transmission mechanism is adapted to extend into the limiting groove, the lid is provided with a limiting part matching the limiting groove, when the lid is set on the top opening, the limiting part is adapted to engage with the limiting groove, and the limiting part is adapted to cooperate with the first transmission mechanism.

In one or more embodiments, the first transmission mechanism including a connecting part, one end of the connecting part extends into the limiting groove, the other end has a transmission part, the micro-switch component has a transmission groove matching the transmission part, when the lid is set on the top opening, the limiting part is pressed down, which can cause the transmission part of the connecting part to move into the transmission groove; when the lid is removed, the limiting part is lifted, which can cause the transmission part of the connecting part to separate from the transmission groove; and
further, wherein the transmission part has an installation groove, the installation groove is provided with the second transmission mechanism; the transmission groove is provided with a transmission switch corresponding to the second transmission mechanism, when the lid is set on the top opening to make the transmission part of the connecting part move into the transmission groove, and the side cover is flipped to close the side opening, which can cause the second transmission mechanism to engage with the transmission switch in the transmission groove.

In one or more embodiments, the second transmission mechanism including a transmission rod and an elastic part, the elastic part is set between the transmission rod and the installation groove, when the side cover is flipped to close the side opening, the elastic part is adapted to be compressed, the transmission rod is adapted to move in the direction of the transmission switch. In one or more embodiments, the micro-switch component including a first micro-switch component and a second micro-switch component connected in series, the first micro-switch component is adapted to cooperate with the first transmission mechanism, the second micro-switch component is adapted to cooperate with the second transmission mechanism, when the lid is set on the top opening, the first transmission mechanism is adapted to make the first micro-switch component conductive; when the side cover closes the side opening, the second transmission mechanism is adapted to make the second micro-switch component conductive. In one or more embodiments, the linkage control system is adapted to be set near the top opening and the side opening.

In one or more embodiments, the lid and/or the side cover is preferably set to be fully or partially visible.

In one or more embodiments, it further including a steam generation system for generating water vapor and introducing it into the cooking cavity, the cooking cavity has an air frying system on the outer side of the rear part, the side wall of the cooking cavity near the air frying system is provided with a hot air hole, the hot flow generated by the air frying system is suitable for entering and exiting the cooking cavity through the hot air hole; the rear part of the cooking cavity is also provided with an exhaust component, the exhaust component including an exhaust channel, a valve core in the exhaust channel, and a drive structure connected to the valve core, both ends of the exhaust channel are respectively connected to the cooking cavity and the atmosphere.

In one or more embodiments, the valve core is preferably made of elastic heat-resistant material, and the cross-sectional shape of the valve core is suitable to match the exhaust channel; and further, wherein the drive structure is adapted to drive the valve core to rotate to close and open at least part of the exhaust channel, when the valve core rotates to close the exhaust channel, the periphery of the valve core is adapted to overfit with the inner wall of the exhaust channel.

In one or more embodiments, the rear part of the cooking cavity is provided with a hot air cavity connected to it, the air frying system is provided in the hot air cavity, the inner wall of the hot air cavity is provided with an exhaust port connected to the exhaust channel, the exhaust port is adapted to correspond to at least part of the air frying system.

In one or more embodiments, the drive structure including a drive motor, the inner wall of the exhaust channel is provided with a through first fixing hole, the first fixing hole is adapted to be opposite the central axis of the exhaust channel, the shaft of the drive motor is adapted to extend into the exhaust channel through the first fixing hole to be connected with the valve core; and further, wherein the inner wall of the exhaust channel is also provided with a second fixing hole corresponding to the first fixing hole, the shaft of the drive motor is adapted to extend into the exhaust channel from the first fixing hole and connect with the valve core, and then extend into the second fixing hole; and further, wherein the outer end of the shaft of the drive motor is provided with a sealing ring, the shaft of the drive motor is adapted to be sealed with the first fixing hole and the second fixing hole through the sealing ring.

In one or more embodiments, a heat dissipation air duct is provided around the outer side of the cooking cavity, and a heat dissipation system for generating a cooling airflow is provided inside the heat dissipation air duct, the heat dissipation air duct is provided with an air inlet and an outlet connected to the atmosphere at both ends; and
further, wherein the exhaust component is at least partially located inside the heat dissipation air duct and is set near the heat dissipation system.

In one or more embodiments, the air fryer has a frying state and a steam cooking state, when the steam generation system is closed and the air frying system is opened, the air fryer is in the frying state, the valve core is adapted to rotate to fully open the exhaust channel; when the air frying system is closed and the steam generation system is opened, the air fryer is in the steam cooking state, the valve core is adapted to rotate to close at least part of the exhaust channel.

### BRIEF DESCRIPTION OF THE DRAWINGS

To illustrate the technical solutions in the specific embodiments of the present disclosure or the prior art more clearly, the accompanying drawings required for use in the specific embodiments or the prior art will be briefly described below, and obviously, the accompanying drawings in the following description are some embodiments of the present disclosure, and other drawings can be obtained from these drawings for those of ordinary skill in the art without paying inventive steps.
FIG. 1 is a schematic diagram of the overall structure of a first embodiment of an air fryer with good safety features of the present disclosure.
FIG. 2 is a schematic diagram of the lid and side cover in the open state of the first embodiment of an air fryer with good safety features of the present disclosure.
FIG. 3 is a partial enlarged view of the first embodiment of an air fryer with good safety features of the present disclosure.
FIG. 4 is a schematic diagram of the linkage control system of the first embodiment of an air fryer with good safety features of the present disclosure.
FIG. 5 is a structural schematic diagram of the linkage control system of the first embodiment of an air fryer with good safety features of the present disclosure.
FIG. 6 is a partial structural view of a second embodiment of an air fryer with good safety features of the present disclosure.
FIG. 7 is a top view of the internal structure of the second embodiment of an air fryer with good safety features of the present disclosure.
FIG. 8 is a cross-sectional view of the exhaust component of the second embodiment of an air fryer with good safety features of the present disclosure.
FIG. 9 is a structural schematic diagram of the exhaust component of the second embodiment of an air fryer with good safety features of the present disclosure.

Signs: 10-body; 11-Cooking cavity; 12-Top opening; 121-Limit groove; 13-Lid; 131-Limiting part; 14-Side opening; 141-Slot; 15-Side cover; 151-Lifting rod; 20-Linkage control system; 21-Micro-switch component; 211-Transmission groove; 212-Transmission switch; 22-First transmission mechanism; 221-Connecting part; 2211-Transmission part; 2212-Installation groove; 23-Second transmission mechanism; 231-Transmission rod; 232-Elastic part; 510-body; 511-Cooking cavity; 512-Hot air hole; 513-Hot air cavity; 514-Exhaust port; 515-Heat dissipation air duct; 520-Steam generation system; 530-Air frying system; 540-Exhaust component; 541-Exhaust channel; 5411-First fixing hole; 5412-Second fixing hole; 542-Valve core; 543-Drive structure; 5431-Drive motor; 544-Seal ring; 550-Heat dissipation system.

### DETAILED DESCRIPTION

The present disclosure provides an air fryer with good thermal insulation to solve the technical problems of poor heat insulation and safety of existing air fryers, and poor user experience.

In order to solve the above technical problems, the present disclosure provides an air fryer with good safety features, including a body, a cooking cavity located within the body, the body having a top opening connected to the cooking cavity at the top, and a lid provided at the top opening to open and close the top opening; the body having a side opening connected to the cooking cavity on the side, and a side cover provided at the side opening to open and close the side opening, wherein the body has a linkage control system inside, the linkage control system being electrically connected to the control circuit inside the body; the linkage control system is also suitable for transmission cooperation with the lid and the side cover, when the lid and the side cover close the top opening and the side opening, the linkage control system is conductive with the control circuit of the body; when either of the top opening and the side opening is in an open state, the linkage control system is disconnected from the control circuit of the body. By setting the linkage control system inside the body to be electrically connected with the air fryer control circuit and to cooperate with the lid and the side cover, it can achieve that only when both the lid and the side cover are closed, the control circuit of the air fryer can be conductive. If one of them is not closed, the control circuit of the air fryer cannot be conductive, and the air fryer cannot be started normally, effectively improving the safety and user experience of the air fryer. In an optional embodiment, the linkage control system including a micro-switch component, a first transmission mechanism, and a second transmission mechanism, one end of the first transmission mechanism and the second transmission mechanism is adapted to cooperate with the micro-switch component, and the other end is adapted to extend to the top opening and the side opening, respectively, to cooperate with the lid and the side cover. The micro-switch component, through the first transmission mechanism and the second transmission mechanism, can reduce the risk of being mistakenly touched and opened, effectively improving the safety of the air fryer product.

In an optional embodiment, the side opening edge is provided with a slot, the second transmission mechanism is adapted to extend into the slot, the side cover is provided with a lifting rod matching the slot, when the side cover is flipped to close the side opening, the lifting rod is adapted to extend into the slot and cooperate with the second transmission mechanism. The slot is adapted to position and/or fix the side cover, by cooperating the lifting rod and the slot, the side cover can be kept in a closed state for continuous cooking, at the same time, by setting one end of the second transmission mechanism in the slot and cooperating with the lifting rod, it can be achieved that only when the side cover is installed on the body, the micro-switch component cooperating with the side cover can be conductive, effectively avoiding the situation of being mistakenly touched and the side cover is not installed in place can also be conductive, improving the safety and reliability of the air fryer product.

In an optional embodiment, the edge of the top opening is provided with a limiting groove, and the first transmission mechanism is adapted to extend into the limiting groove, the lid is provided with a limiting part matching the limiting groove, when the lid is set on the top opening, the limiting part is adapted to engage with the limiting groove, and the limiting part is adapted to cooperate with the first transmission mechanism. In the air fryer, the limiting groove can not only position and fix the lid but also reduce the risk of the lid falling off due to sliding, at the same time, by setting one end of the first transmission mechanism in the limiting groove and cooperating with the limiting part, it can be achieved that only when the lid is installed on the body, the micro-switch component cooperating with the lid can be conductive, effectively avoiding the situation of being mistakenly touched and the lid is not installed in place can also be conductive, improving the safety and reliability of the air fryer product.

In an optional embodiment, the first transmission mechanism including a connecting part, one end of the connecting part extends into the limiting groove, and the other end has a transmission part, the micro-switch component has a transmission groove matching the transmission part, when the lid is set on the top opening, the limiting part is pressed down, which can cause the transmission part of the connecting part to move into the transmission groove, when the lid is removed, the limiting part is lifted, which can cause the transmission part of the connecting part to separate from the transmission groove. By using the pressing action of the limiting part to make the transmission part of the connecting part engage with the transmission groove of the micro-switch component, rapid transmission can be achieved, at the same time, after the limiting part is lifted, the transmission part is adapted to automatically separate from the transmission groove under the action of gravity, which not only saves effort but also reduces the structure for separating the transmission part from the transmission groove, effectively simplifying the structure of the linkage control system.

In an optional embodiment, the transmission part has an installation groove, the installation groove is provided with the second transmission mechanism, the transmission groove is provided with a transmission switch corresponding to the second transmission mechanism, when the lid is set on the top opening to make the transmission part of the connecting part move into the transmission groove, the side cover is flipped to close the side opening, which can cause the second transmission mechanism to engage with the transmission switch in the transmission groove. By setting the second transmission mechanism in the installation groove of the first transmission mechanism, the overall structure of the linkage control system can be simplified, and the structural integrity and linkage control of the first transmission mechanism and the second transmission mechanism can be effectively improved.

In an optional embodiment, the second transmission mechanism including a transmission rod and an elastic part, the elastic part is set between the transmission rod and the installation groove, when the side cover is flipped to close the side opening, the elastic part is adapted to be compressed, and the transmission rod is adapted to move in the direction of the transmission switch. By setting the elastic part between the transmission rod and the installation groove, the transmission rod can automatically separate from the transmission switch when the side cover is flipped to open the side opening, making the air fryer in a power-off state, which not only effectively improves the convenience of use but also improves the safety of the air fryer.

In an optional embodiment, the micro-switch component including a first micro-switch component and a second micro-switch component connected in series, the first micro-switch component is adapted to cooperate with the first transmission mechanism, the second micro-switch component is adapted to cooperate with the second transmission mechanism, when the lid is set on the top opening, the first transmission mechanism is adapted to make the first micro-switch component conductive, when the side cover closes the side opening, the second transmission mechanism is adapted to make the second micro-switch component conductive. By connecting the first micro-switch component and the second micro-switch component in series, when one of the first micro-switch component and the second micro-switch component is in an open state, the micro-switch component as a whole is in an open state, which can not only better achieve linkage control but also effectively improve the safety of use.

In an optional embodiment, the linkage control system is adapted to be set near the top opening and the side opening. By setting the linkage control system near the top opening and the side opening, the transmission distance can be effectively reduced, and the linkage control can be carried out more quickly and accurately, improving the safety of the air fryer product.

In an optional embodiment, the lid and/or the side cover is preferably set to be fully or partially visible. By setting the lid and/or the side cover to be visible, users can directly observe the cooking status of the food in the cooking cavity through the lid and/or the side cover, without the need to open the cover for inspection, avoiding the cumbersome operation of power off caused by opening the cover, improving the convenience of use, and also avoiding the impact of opening the cover on the food in the cooking cavity, effectively improving the cooking effect of the food and the user experience.

This application also provides an air fryer with adjustable exhaust to solve the technical problem of single function, poor applicability and practicality, and poor user experience of the existing air fryer. To solve the above technical problem, this application provides an air fryer with adjustable exhaust, including a body, a cooking cavity inside the body, and a steam generation system for generating water vapor and introducing it into the cooking cavity, the cooking cavity has an air frying system on the outer side of the rear part, the side wall of the cooking cavity near the air frying system is provided with a hot air hole, the hot flow generated by the air frying system is suitable for entering and exiting the cooking cavity through the hot air hole, the rear part of the cooking cavity is also provided with an exhaust component, the exhaust component including an exhaust channel, a valve core in the exhaust channel, and a drive structure connected to the valve core, both ends of the exhaust channel are respectively connected to the cooking cavity and the atmosphere. This application, by setting the exhaust component on the outer side of the rear part of the cooking cavity, can achieve the control and adjustment of the exhaust of the gas in the cooking cavity, making the steam cooking and air frying of the air fryer can be set as one, effectively improving the applicability and practicality of the air fryer product, and improving the user experience.

In an optional embodiment, the valve core is preferably made of elastic heat-resistant material, and the cross-sectional shape of the valve core is suitable to match the exhaust channel. By using elastic heat-resistant material to make the valve core and setting the cross-sectional shape of the valve core to match the exhaust channel, not only can the structural fit between the valve core and the exhaust channel be improved, but also the influence of the high-temperature air flow in the exhaust channel on the valve core can be avoided, effectively improving the structural reliability of the valve core.

In an optional embodiment, the drive structure is adapted to drive the valve core to rotate to close and open at least part of the exhaust channel, when the valve core rotates to close the exhaust channel, the periphery of the valve core is adapted to overfit with the inner wall of the exhaust channel. By the drive structure driving the valve core to rotate, the automatic adjustment of the exhaust channel can be achieved, effectively improving the convenience of use of the air fryer. At the same time, when the valve core closes the exhaust channel, by overfitting the periphery of the valve core with the inner wall of the exhaust channel, the sealing effect of the valve core can be improved, thereby improving the structural reliability of the air fryer.

In an optional embodiment, the rear part of the cooking cavity is provided with a hot air cavity connected to it, the air frying system is provided in the hot air cavity, the inner wall of the hot air cavity is provided with an exhaust port connected to the exhaust channel, the exhaust port is adapted to correspond to at least part of the air frying system. By setting the exhaust port to correspond to the air frying system, the exhaust efficiency of the gas in the cooking cavity can be improved, and the oil smoke produced by the food fried in the cooking cavity can be quickly exhausted, avoiding the accumulation of oil smoke affecting the taste of the food.

In an optional embodiment, the drive structure including a drive motor, the inner wall of the exhaust channel is provided with a through first fixing hole, the first fixing hole is adapted to be opposite the central axis of the exhaust channel, the shaft of the drive motor is adapted to extend into the exhaust channel through the first fixing hole to be connected with the valve core. By setting the first fixing hole to be opposite the central axis of the exhaust channel, the shaft of the drive motor can be stably connected with the valve core after passing through the first fixing hole, and the cam effect formed by the drive motor driving the valve core to rotate can be avoided, thus avoiding the situation of j amming and poor sealing, effectively improving the performance stability.

In an optional embodiment, the inner wall of the exhaust channel is also provided with a second fixing hole corresponding to the first fixing hole, the shaft of the drive motor is adapted to extend into the exhaust channel from the first fixing hole to be connected with the valve core and then extend into the second fixing hole. The first fixing hole and the second fixing hole can position and/or locate the shaft of the drive motor, which can not only reduce the installation difficulty of the drive motor but also improve the stability of the drive motor driving the valve core to rotate.

In an optional embodiment, the outer end of the shaft of the drive motor is provided with a sealing ring, the shaft of the drive motor is adapted to be sealed with the first fixing hole and the second fixing hole through the sealing ring. The sealing ring can achieve the sealed connection between the shaft of the drive motor and the exhaust channel, avoiding the high-temperature airflow in the exhaust channel from flowing out, affecting the normal work of the drive motor and other electrical components, effectively improving the safety and performance stability of the exhaust component.

In an optional embodiment, a heat dissipation air duct is provided around the outer side of the cooking cavity, and a heat dissipation system for generating a cooling airflow is provided inside the heat dissipation air duct, the heat dissipation air duct is provided with an air inlet and an outlet connected to the atmosphere at both ends. By providing a heat dissipation air duct around the outer side of the cooking cavity, the high-temperature heat in the cooking cavity can be prevented from being conducted to the outside of the cooking cavity, affecting the normal operation of other electrical components outside the cooking cavity, at the same time, the overall temperature of the air fryer can be quickly reduced to avoid burns caused by high temperatures, effectively improving the safety of use.

In an optional embodiment, the exhaust component is at least partially located inside the heat dissipation air duct and is set near the heat dissipation system. By setting at least part of the exhaust component inside the heat dissipation air duct, the temperature of the airflow discharged by the exhaust component can be reduced, avoiding burns, and the overall temperature of the exhaust component can be effectively reduced to avoid high temperatures affecting the exhaust performance, at the same time, by setting the exhaust component near the heat dissipation system, the heat dissipation effect can be improved.

In an optional embodiment, the air fryer has a frying state and a steam cooking state, when the steam generation system is closed and the air frying system is opened, the air fryer is in the frying state, and the valve core is adapted to rotate to fully open the exhaust channel, when the air frying system is closed and the steam generation system is opened, the air fryer is in the steam cooking state, and the valve core is adapted to rotate to close at least part of the exhaust channel. By controlling and adjusting the opening and closing of the exhaust channel by the valve core, the air fryer can freely switch between the frying state and the steam cooking state, which can not only enrich the functionality of the air fryer but also effectively improve the user experience.

Compared with the prior art, the beneficial effects of the present disclosure are as follows:
in the present disclosure, by setting the linkage control system inside the body to be electrically connected with the air fryer control circuit and to cooperate with the lid and the side cover, can achieve that only when both the lid and the side cover are closed, the control circuit of the air fryer can be conductive. If one of them is not closed, the control circuit of the air fryer cannot be conductive, and the air fryer cannot be started normally, effectively improving the safety and user experience of the air fryer. At the same time, this application, by setting the exhaust component on the outer side of the rear part of the cooking cavity, can achieve the control and adjustment of the exhaust of the gas in the cooking cavity, making the steam cooking and air frying of the air fryer can be set as one, effectively improving the applicability and practicality of the air fryer product.

In addition, this application, by setting the valve core in the exhaust channel and controlling and adjusting the opening and closing of the exhaust channel by the valve core, can make the air fryer freely switch between the frying state and the steam cooking state, which can not only enrich the functionality of the air fryer but also effectively improve the user experience.

In order to make the objects, technical solutions and advantages of the embodiments of the present disclosure more clear, the technical solutions in the embodiments of the present disclosure will be clearly and completely described below in conjunction with the accompanying drawings in the embodiments of the present disclosure, and obviously, the described embodiments are a part of the embodiments of the present disclosure, rather than all of the embodiments. The components of the embodiments of the present disclosure generally described and illustrated in the accompanying drawings herein can be arranged and designed in a variety of different configurations.

Thus, the following detailed description of the embodiments of the present disclosure provided in the accompanying drawings is not intended to limit the scope of the present disclosure, but is merely representative of selected embodiments of the present disclosure. Based on the embodiments in the present disclosure, all other embodiments obtained by those of ordinary skill in the art without making inventive steps belong to the scope of protection of the present disclosure.

### Embodiment 1:

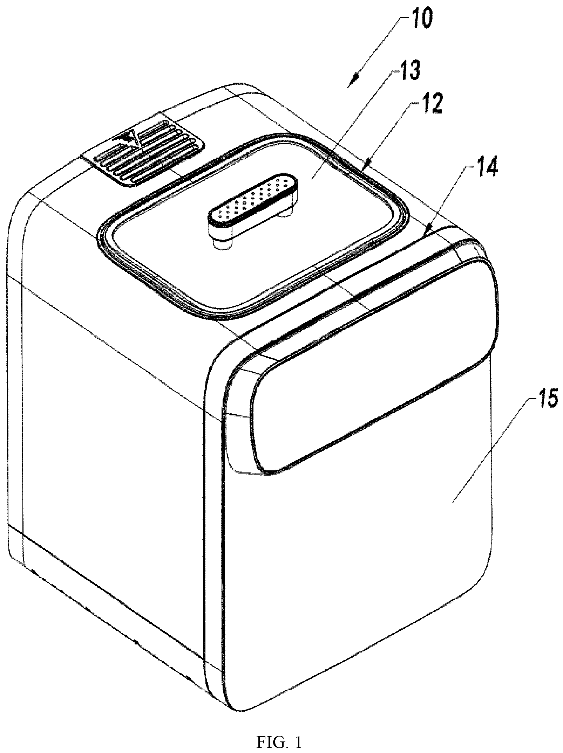

FIGS. 1 to 5 illustrate a first embodiment of an air fryer with good safety features provided in this application, the air fryer including a body 10, the body 10 has a cooking cavity 11 and an air frying system connected to the cooking cavity 11, the air frying system is suitable for generating a circulating hot flow and introducing it into the cooking cavity 11 for food cooking. As shown in FIGS. 1 to 3, the body 10 has a top opening 12 connected to the cooking cavity 11 at the top, and a lid 13 is provided at the top opening 12 to open and close the top opening 12. The body 10 has a side opening 14 connected to the cooking cavity 11 on the side, and a side cover 15 is provided at the side opening 14 to open and close the side opening 14. A linkage control system 20 is provided inside the body 10, which is suitable for being electrically connected to the control circuit inside the body 10, and the linkage control system 20 is also suitable for transmission cooperation with the lid 13 and the side cover 15. When the lid 13 and the side cover 15 close the top opening 12 and the side opening 14, the linkage control system 20 is suitable for being conductive with the control circuit of the body 10. When either the top opening 12 or the side opening 14 is in an open state, the linkage control system 20 is suitable for being disconnected from the control circuit of the body 10. This application, by setting the linkage control system 20 inside the body 10 to be electrically connected to the air fryer control circuit and to cooperate with the lid 13 and the side cover 15, can achieve that only when both the lid 13 and the side cover 15 are closed, the control circuit of the air fryer can be conductive. If one of them is not closed, the control circuit of the air fryer cannot be conductive, and the air fryer cannot be started normally. Through the linkage control system 20, the safety and user experience of the air fryer can be effectively improved.

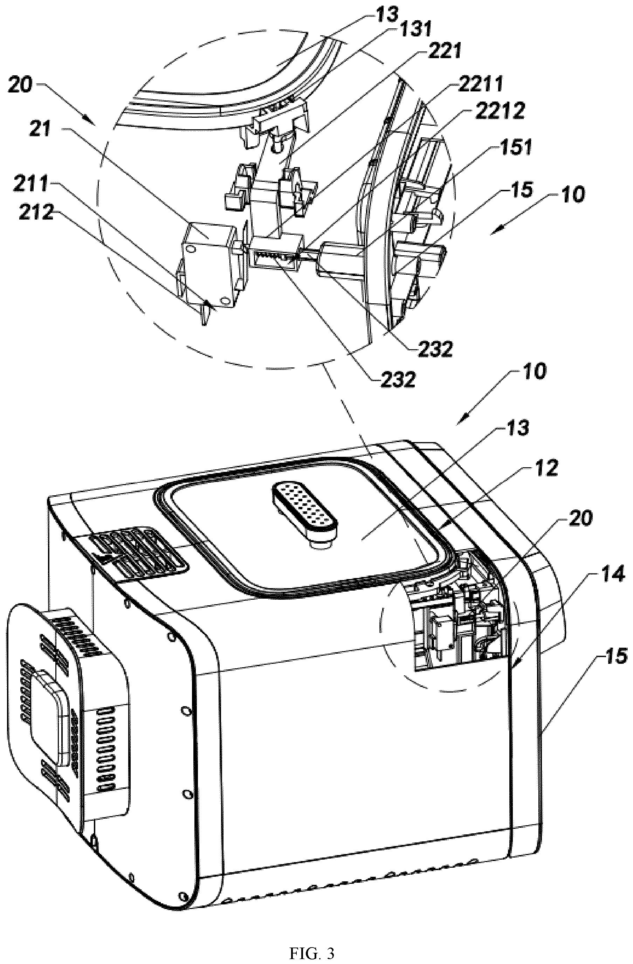

As shown in FIGS. 3 to 5, the linkage control system 20 including a micro-switch component 21, a first transmission mechanism 22, and a second transmission mechanism 23. One end of the first transmission mechanism 22 and the second transmission mechanism 23 is adapted to cooperate with the micro-switch component 21, and the other end is adapted to extend to the top opening 12 and the side opening 14, respectively, to cooperate with the lid 13 and the side cover 15. The micro-switch component 21, through the first transmission mechanism 22 and the second transmission mechanism 23, can reduce the risk of being mistakenly touched and opened, effectively improving the safety of the air fryer product.

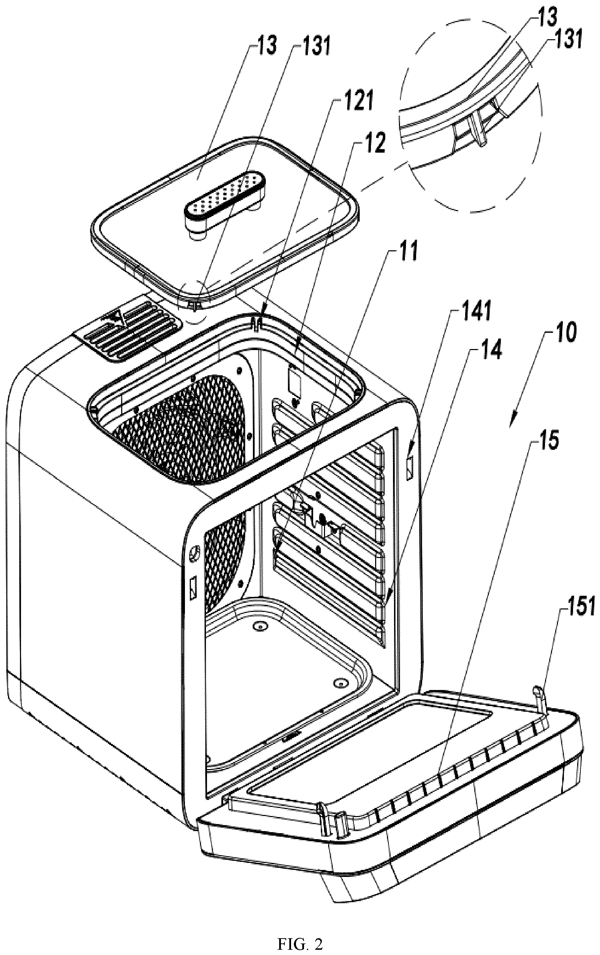

As shown in FIGS. 2, the side opening 14 edge is provided with a slot 141, and the second transmission mechanism 23 is adapted to extend into the slot 141. The side cover 15 is provided with a lifting rod 151 matching the slot 141. When the side cover 15 is flipped to close the side opening 14, the lifting rod 151 is adapted to extend into the slot 141 and cooperate with the second transmission mechanism 23. In the air fryer, the slot 141 can not only position the side cover 15 but also fix the side cover 15. When the side cover 15 is closed, the side cover 15 can be kept in a closed state by cooperating the lifting rod 151 and the slot 141, which is convenient for the air fryer to continue cooking. At the same time, by setting one end of the second transmission mechanism 23 in the slot 141 and cooperating with the lifting rod 151, it can be achieved that only when the side cover 15 is installed on the body 10, the micro-switch component 21 cooperating with the side cover 15 can be conductive, effectively avoiding the situation of being mistakenly touched and the side cover 15 is not installed in place can also be conductive, improving the safety and reliability of the air fryer product.

As shown in FIGS. 2, the edge of the top opening 12 is provided with a limiting groove 121, and the first transmission mechanism 22 is adapted to extend into the limiting groove 121. The lid 13 is provided with a limiting part 131 matching the limiting groove 121. When the lid 13 is set on the top opening 12, the limiting part 131 is adapted to engage with the limiting groove 121, and the limiting part 131 is adapted to cooperate with the first transmission mechanism 22. In the air fryer, the limiting groove 121 can not only position and fix the lid 13 but also reduce the risk of the lid 13 falling off due to sliding. At the same time, by setting one end of the first transmission mechanism 22 in the limiting groove 121 and cooperating with the limiting part 131, it can be achieved that only when the lid 13 is installed on the body 10, the micro-switch component 21 cooperating with the lid 13 can be conductive, effectively avoiding the situation of being mistakenly touched and the lid 13 is not installed in place can also be conductive, improving the safety and reliability of the air fryer product.

As shown in FIGS. 3 to 5, in one optional embodiment, the first transmission mechanism 22 including a connecting part 221, and the connecting part 221 has a shaft extending at one end to the limiting groove 121. The other end has a transmission part 2211, and the micro-switch component 21 has a transmission groove 211 matching the transmission part 2211. When the lid 13 is set on the top opening 12, the limiting part 131 is pressed down, which can cause the transmission part 2211 of the connecting part 221 to move into the transmission groove 211. When the lid 13 is removed, the limiting part 131 is lifted, which can cause the transmission part 2211 of the connecting part 221 to separate from the transmission groove 211. By using the pressing action of the limiting part 131 to make the transmission part 2211 of the connecting part 221 engage with the transmission groove 211 of the micro-switch component 21, rapid transmission can be achieved. At the same time, after the limiting part 131 is lifted, the transmission part 2211 is adapted to automatically separate from the transmission groove 211 under the action of gravity, which not only saves effort but also reduces the structure for separating the transmission part from the transmission groove, effectively simplifying the structure of the linkage control system 20.

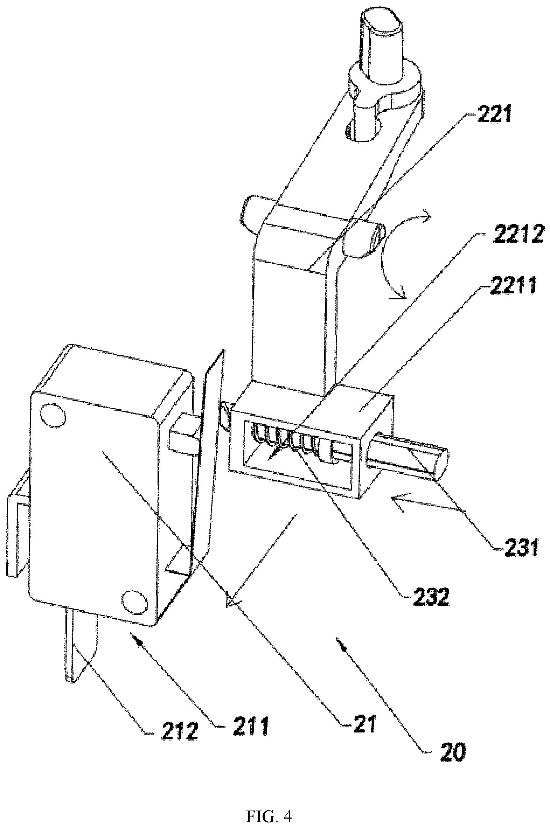

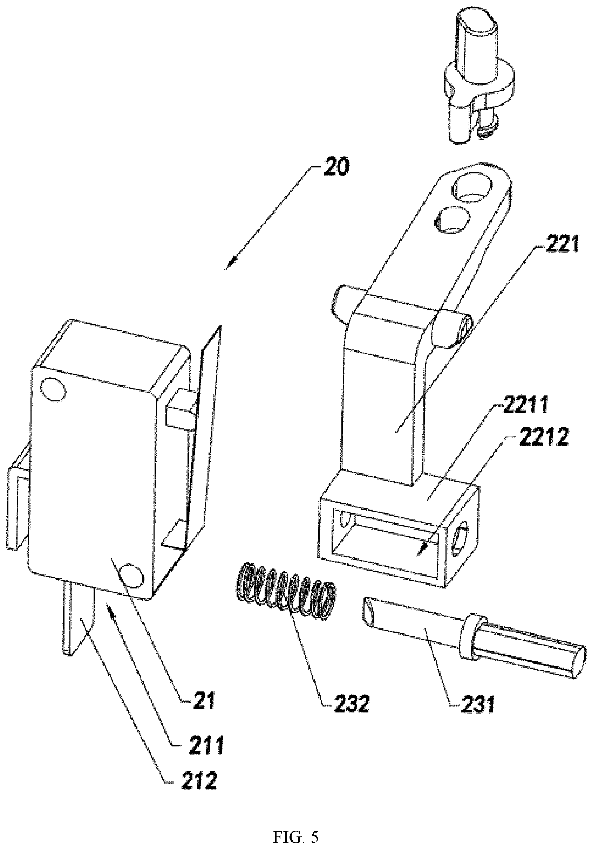

As shown in FIGS. 4 and 5, the transmission part 2211 also has an installation groove 2212, and the second transmission mechanism 23 is installed in the installation groove 2212. The transmission groove 211 is provided with a transmission switch 212 corresponding to the second transmission mechanism 23. When the lid 13 is set on the top opening 12 to make the transmission part 2211 of the connecting part 221 move into the transmission groove 211, the side cover 15 is flipped to close the side opening 14, which can cause the second transmission mechanism 23 to engage with the transmission switch 212 in the transmission groove 211. By setting the second transmission mechanism 23 in the installation groove 2212 of the first transmission mechanism 22, the overall structure of the linkage control system 20 can be simplified, and the structural integrity and linkage control of the first transmission mechanism 22 and the second transmission mechanism 23 can be effectively improved.

As shown in FIGS. 4 and 5, the second transmission mechanism 23 including a transmission rod 231 and an elastic part 232. The elastic part 232 is set between the transmission rod 231 and the installation groove 2212. When the side cover 15 is flipped to close the side opening 14, the elastic part 232 is adapted to be compressed, and the transmission rod 231 is adapted to move in the direction of the transmission switch 212. By setting the elastic part 232 between the transmission rod 231 and the installation groove 212, the transmission rod 231 can automatically separate from the transmission switch 212 when the side cover 15 is flipped to open the side opening 14, making the air fryer in a power-off state, which not only effectively improves the convenience of use but also improves the safety of the air fryer.

In one optional embodiment, the micro-switch component 21 including a first micro-switch component and a second micro-switch component connected in series. The first micro-switch component is adapted to cooperate with the first transmission mechanism 22, and the second micro-switch component is adapted to cooperate with the second transmission mechanism 23. When the lid 13 is set on the top opening 12, the first transmission mechanism 22 is adapted to make the first micro-switch component conductive. When the side cover 15 closes the side opening 14, the second transmission mechanism 23 is adapted to make the second micro-switch component conductive. By connecting the first micro-switch component and the second micro-switch component in series, when one of the first micro-switch component and the second micro-switch component is in an open state, the micro-switch component as a whole is in an open state, which can not only better achieve linkage control but also effectively improve the safety of use.

Furthermore, as shown in FIGS. 3, the linkage control system 20 is preferably set near the top opening 12 and the side opening 14. By setting the linkage control system 20 near the top opening 12 and the side opening 14, the transmission distance can be effectively reduced, and the linkage control can be carried out more quickly and accurately, improving the safety of the air fryer product.

In one optional embodiment, the lid 13 and/or the side cover 15 is preferably set to be fully or partially visible. By setting the lid 13 and/or the side cover 15 to be visible, users can directly observe the cooking status of the food in the cooking cavity 11 through the lid 13 and/or the side cover 15, without the need to open the cover for inspection, avoiding the cumbersome operation of power off caused by opening the cover, improving the convenience of use, and also avoiding the impact of opening the cover on the food in the cooking cavity 11, effectively improving the cooking effect of the food and the user experience. In addition, in another optional embodiment, both the lid 13 and the side cover 15 can be set to be visible, and setting both the lid 13 and the side cover 15 to be visible can effectively improve the visual effect of the air fryer product, thereby improving the user experience.

### Embodiment 2:

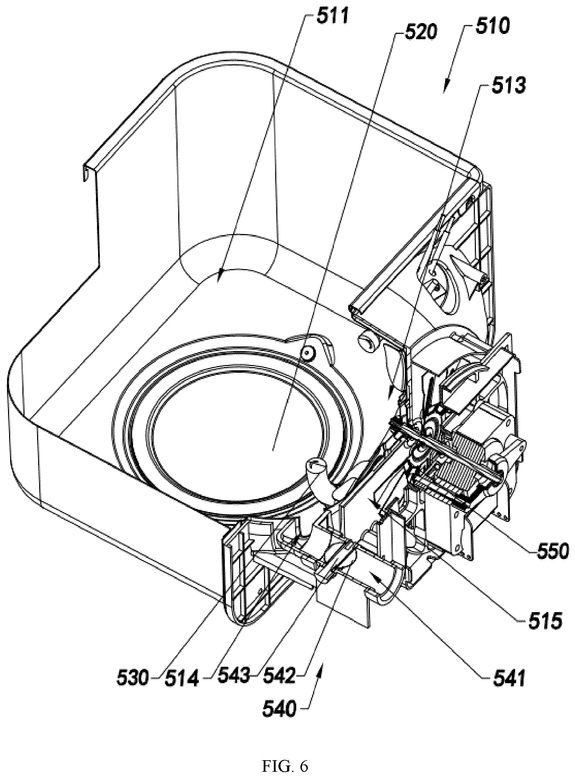

FIGS. 6 to 9 illustrate a second embodiment of an air fryer with good safety features provided in this application. Compared with the air fryer in the first embodiment, some structures and functions of the air fryer in the second embodiment are the same, which will not be repeated here.

As shown in FIGS. 6 to 9, in the second embodiment, the air fryer including a body 510 and a steam generation system 520 provided inside the body 510 for generating high-temperature water vapor. The body 510 has a cooking cavity 511, and the steam generation system 520 is suitable for connecting to the cooking cavity 11. The high-temperature water vapor generated by the steam generation system 520 is suitable for being introduced into the cooking cavity 511 for steam cooking of food.

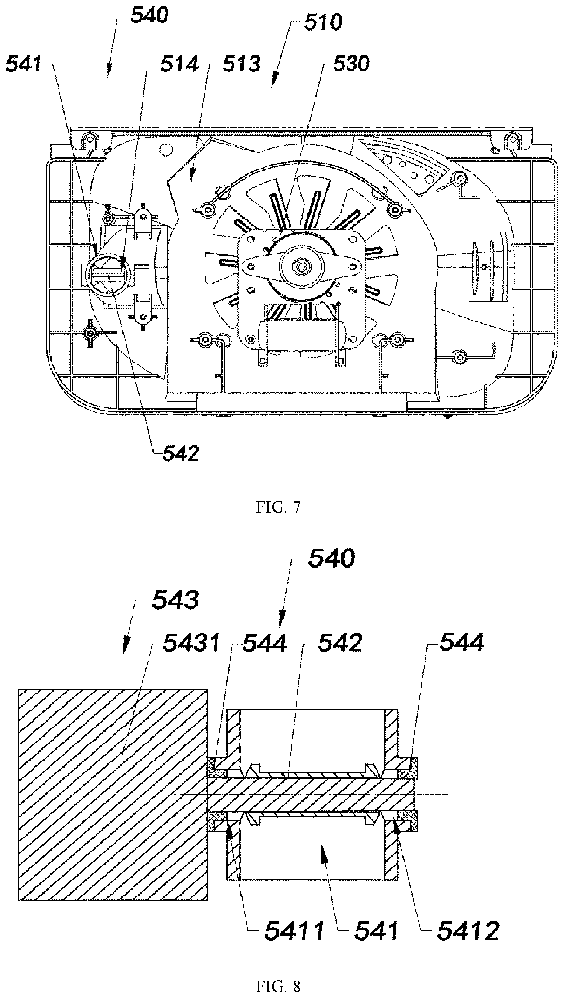

As shown in FIGS. 6 and 7, the body 510 also has an air frying system 530 for generating a circulating hot flow. The air frying system 530 is preferably located on the outer side of the rear part of the cooking cavity 511. The side wall of the cooking cavity 511 near the air frying system 530 has a hot air hole 512. The circulating hot flow generated by the air frying system 530 is suitable for entering and exiting the cooking cavity 511 through the hot air hole 512 for frying and roasting food.

As shown in FIGS. 6 to 9, the rear part of the cooking cavity 511 is also provided with an exhaust component 540, which including an exhaust channel 541, a valve core 542 in the exhaust channel 541, and a drive structure 543 connected to the valve core 542. Both ends of the exhaust channel 541 are respectively connected to the cooking cavity 511 and the atmosphere, and the exhaust channel 541 can be used to exhaust the gas in the cooking cavity 511. The valve core 542 is suitable for controlling and adjusting the opening and closing of the exhaust channel 541, and the drive structure 543 is suitable for driving the valve core 542 to rotate to control and adjust the opening and closing of the exhaust channel 541. In the air fryer, by setting the exhaust component 540 on the outer side of the rear part of the cooking cavity 511, the exhaust of the gas in the cooking cavity 511 can be controlled and adjusted, making the steam cooking and air frying of the air fryer can be set as one, effectively improving the applicability and practicality of the air fryer product, and improving the user experience.

In one optional embodiment, the valve core 542 is preferably made of elastic heat-resistant material, and the cross-sectional shape of the valve core 542 is suitable to match the exhaust channel 541. By using elastic heat-resistant material to make the valve core 542 and setting the cross-sectional shape of the valve core 542 to match the exhaust channel 541, not only can the structural fit between the valve core 542 and the exhaust channel 541 be improved, but also the influence of the high-temperature airflow in the exhaust channel 541 on the valve core 542 can be avoided, effectively improving the structural reliability of the valve core 542.

In one optional embodiment, the drive structure 543 is adapted to drive the valve core 542 to rotate to close and open at least part of the exhaust channel 541. When the valve core 542 rotates to close the exhaust channel 541, the periphery of the valve core 542 is adapted to overfit with the inner wall of the exhaust channel 541. By the drive structure 543 driving the valve core 542 to rotate, the automatic adjustment of the exhaust channel 541 can be achieved, effectively improving the convenience of use of the air fryer. At the same time, when the valve core 542 closes the exhaust channel 541, by overfitting the periphery of the valve core 542 with the inner wall of the exhaust channel 541, the sealing effect of the valve core 542 can be improved, thereby improving the structural reliability of the air fryer.

As shown in FIGS. 6, the rear part of the cooking cavity 511 is provided with a hot air cavity 513, and the air frying system 530 is provided in the hot air cavity 513. The inner wall of the hot air cavity 513 is provided with an exhaust port 514 connected to the exhaust channel 541, and the exhaust port 514 is adapted to correspond to at least part of the air frying system 530. By setting the exhaust port 514 to correspond to the air frying system 530, the exhaust efficiency of the gas in the cooking cavity 511 can be improved, and the oil smoke produced by the food fried in the cooking cavity 511 can be quickly exhausted, avoiding the accumulation of oil smoke affecting the taste of the food.

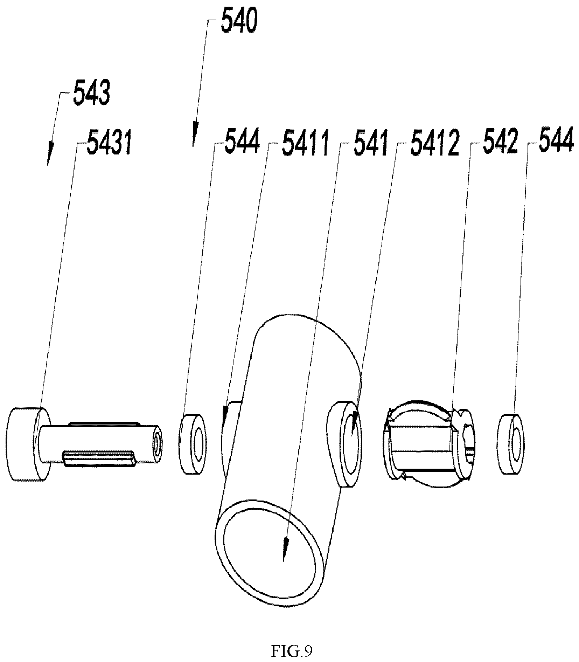

As shown in FIGS. 8 and 9, the drive structure 543 including a drive motor 5431, and the inner wall of the exhaust channel 541 is provided with a through first fixing hole 5411. The first fixing hole 5411 is adapted to be opposite the central axis of the exhaust channel 541, and the shaft of the drive motor 5431 is adapted to extend into the exhaust channel 541 through the first fixing hole 5411 to be connected with the valve core 542. By setting the first fixing hole 5411 to be opposite the central axis of the exhaust channel 541, the shaft of the drive motor 5431 can be stably connected with the valve core 542 after passing through the first fixing hole 5411, and the cam effect formed by the drive motor 5431 driving the valve core 542 to rotate can be avoided, thus avoiding the situation of jamming and poor sealing, effectively improving the performance stability.

As shown in FIGS. 8 and 9, the inner wall of the exhaust channel 541 is also provided with a second fixing hole 5412 corresponding to the first fixing hole 5411. The shaft of the drive motor 5431 is adapted to extend into the exhaust channel 541 from the first fixing hole 5411 and connect with the valve core 542, and then extend into the second fixing hole 5412. The first fixing hole 5411 and the second fixing hole 5412 can not only position the shaft of the drive motor 5431 to reduce the installation difficulty of the drive motor 5431 but also limit the position of the shaft of the drive motor 5431 to effectively improve the stability of the drive motor 5431 driving the valve core 542 to rotate.

As shown in FIGS. 8 and 9, the outer end of the shaft of the drive motor 5431 is provided with a sealing ring 544, and the shaft of the drive motor 5431 is adapted to be sealed with the first fixing hole 5411 and the second fixing hole 5412 through the sealing ring 544. The sealing ring 544 can achieve the sealed connection between the shaft of the drive motor 5431 and the exhaust channel 541, avoiding the high-temperature airflow in the exhaust channel 541 from flowing out, affecting the normal work of the drive motor 5431 and other electrical components, effectively improving the safety and performance stability of the exhaust component 540.

As shown in FIGS. 6, a heat dissipation air duct 515 is provided around the outer side of the cooking cavity 511, and a heat dissipation system 550 for generating a cooling airflow is provided inside the heat dissipation air duct 515. The heat dissipation air duct 515 is provided with an air inlet and an outlet connected to the atmosphere at both ends. By providing a heat dissipation air duct 515 around the outer side of the cooking cavity 511, the high-temperature heat in the cooking cavity 511 can be prevented from being conducted to the outside of the cooking cavity 511, affecting the normal operation of other electrical components outside the cooking cavity 511. At the same time, the overall temperature of the air fryer can be quickly reduced to avoid burns caused by high temperatures, effectively improving the safety of use. As shown in FIGS. 6, the exhaust component 540 is at least partially located inside the heat dissipation air duct 515 and is set near the heat dissipation system 550. By setting at least part of the exhaust component 540 inside the heat dissipation air duct 515, the temperature of the airflow discharged by the exhaust component 540 can be reduced, avoiding burns, and the overall temperature of the exhaust component 540 can be effectively reduced to avoid high temperatures affecting the exhaust performance. At the same time, by setting the exhaust component 540 near the heat dissipation system 550, the heat dissipation effect can be improved. In one optional embodiment, the air fryer has a frying state and a steam cooking state. When the steam generation system 520 is closed and the air frying system 530 is opened, the air fryer is in the frying state, and the valve core 542 is adapted to rotate to fully open the exhaust channel 541. When the air frying system 530 is closed and the steam generation system 520 is opened, the air fryer is in the steam cooking state, and the valve core 542 is adapted to rotate to close at least part of the exhaust channel 541. By controlling and adjusting the opening and closing of the exhaust channel 541 by the valve core 542, the air fryer can freely switch between the frying state and the steam cooking state, which can not only enrich the functionality of the air fryer but also effectively improve the user experience.

The content above is a further detailed explanation made in conjunction with specific preferred embodiments of this application, and the objectives of this application have been completely and effectively achieved. Those skilled in the art should understand that the above description and the embodiments shown in the accompanying drawings are only for illustration and do not limit this application. For those of ordinary skill in the art to which this application pertains, without departing from the premise of this application, several simple deductions or substitutions can also be made, all of which should be regarded as falling within the patent protection scope determined by the claims submitted with this application.

It should be noted that the terms used herein are for the purpose of describing specific embodiments only and are not intended to limit exemplary embodiments according to the present disclosure. As used herein, the singular forms are intended to including the plural forms as well, unless the context clearly indicates otherwise. Furthermore, it should also be understood that the terms "including" and/or "including", when used in this specification, indicate the presence of features, steps, operations, devices, components, and/or combinations thereof. Relative arrangements, numerical expressions, and numerical values of the components and steps described in these embodiments do not limit the scope of the present disclosure unless specifically stated otherwise. At the same time, it should be understood that for convenience of description, the dimensions of the parts shown in the drawings are not drawn to an actual scale. Techniques, methods, and apparatus known to those of ordinary skill in the relevant art may not be discussed in detail, but where appropriate, should be considered part of the authorized specification. In all of the examples shown and discussed herein, any specific values should be interpreted as merely exemplary, and not as limiting. Accordingly, other examples of exemplary embodiments may have different values. It should be noted that like reference numerals and letters denote like items in the following FIGS., and therefore, once an item is defined in one FIGS., it need not be further discussed in subsequent FIGS..

In the description of the present disclosure, it should be understood that the orientation or positional relationship indicated by orientation words such as "front, back, up, down, left, right," "transverse, vertical, perpendicular, horizontal," and "top, bottom," and the like are generally based on the orientation or positional relationship shown in the drawings, merely for convenience of describing the present disclosure and for simplicity of description, and unless otherwise stated, the orientation words do not indicate or imply that the device or element referred to must have a particular orientation or be constructed and operated in a particular orientation, and therefore are not to be construed as limiting the scope of protection of the present disclosure; and the orientation words "inside and outside" refer to inside and outside with respect to the contour of each component itself.

For ease of description, spatially relative terms such as "on top of", "over", "on the upper surface", "above", and the like may be used herein to describe the spatial positional relationship between one device or feature and other devices or features as illustrated in the FIGS. It should be understood that the spatially relative terms are intended to encompass different orientations of the device in use or operation in addition to the orientation depicted in the FIGS. For example, if the devices in the FIGS. are inverted, devices described as "above" or "over" other devices or constructions would then be positioned "below" or "beneath" the other devices or constructions. Thus, the exemplary term "above" can include both orientations of "above" and "below." The device can also be positioned in other different ways (rotated by 90 degrees or at other orientations) and the spatially relative depictions used herein are interpreted accordingly.

In addition, it should be noted that the use of the terms "first", "second", and the like to define components is merely for ease of distinguishing between the corresponding components, and if not otherwise stated, the terms have no special meaning and therefore should not be interpreted to limit the scope of protection of the present disclosure.

The air fryer with good safety features provided by the present disclosure has been described in detail above, the principles and embodiments of the present disclosure have been described herein with reference to specific examples, the description of the above embodiments is provided only to help understand the method of the present disclosure and its core idea; and meanwhile, variations will be made to the specific embodiments and the scope of application by those of ordinary skill in the art in view of the idea of the present disclosure. In summary, the contents of this specification should not be construed as limiting the present disclosure.

### Industrial applicability

In the air fryer with good safety features in this example, by setting the linkage control system inside the body to be electrically connected with the air fryer control circuit and to cooperate with the lid and the side cover, it can be achieved that only when both the lid and the side cover are closed, the control circuit of the air fryer can be conductive. If one of them is not closed, the control circuit of the air fryer cannot be conductive, and the air fryer cannot be started normally, effectively improving the safety and user experience of the air fryer. At the same time, this application, by setting the exhaust component on the outer side of the rear part of the cooking cavity, can achieve the control and adjustment of the exhaust of the gas in the cooking cavity, making the steam cooking and air frying of the air fryer can be set as one, effectively improving the applicability and practicality of the air fryer product. In addition, by setting the valve core in the exhaust channel and controlling and adjusting the opening and closing of the exhaust channel by the valve core, the air fryer can freely switch between the frying state and the steam cooking state, which can not only enrich the functionality of the air fryer but also effectively improve the user experience.

## Claims

1. An air fryer with good safety features, including a body (10), a cooking cavity (11) located within the body (10), the body (10) having a top opening (12) connected to the cooking cavity (11) at the top, and a lid (13) provided at the top opening (12) to open and close the top opening (12); the body (10) having a side opening (14) connected to the cooking cavity (11) on the side, and a side cover (15) provided at the side opening (14) to open and close the side opening (14), wherein the body (10) has a linkage control system (20) inside, the linkage control system (20) being electrically connected to the control circuit inside the body (10); the linkage control system (20) is also suitable for transmission cooperation with the lid (13) and the side cover (15), when the lid (13) and the side cover (15) close the top opening (12) and the side opening (14), the linkage control system (20) is conductive with the control circuit of the body (10); when either of the top opening (12) and the side opening (14) is in an open state, the linkage control system (20) is disconnected from the control circuit of the body (10).

2. The air fryer with good safety features according to claim 1, wherein the linkage control system (20) including a micro-switch component (21), a first transmission mechanism (22), and a second transmission mechanism (23), one end of the first transmission mechanism (22) and the second transmission mechanism (23) is adapted to cooperate with the micro-switch component (21), and the other end is adapted to extend to the top opening (12) and the side opening (14) respectively, to cooperate with the lid (13) and the side cover (15).

3. The air fryer with good safety features according to claim 2, wherein the edge of the side opening (14) is provided with a slot (141), the second transmission mechanism (23) is adapted to extend into the slot (141), the side cover (15) is provided with a lifting rod (151) matching the slot (141), when the side cover (15) is flipped to close the side opening (14), the lifting rod (151) is adapted to extend into the slot (141) and cooperate with the second transmission mechanism (23).

4. The air fryer with good safety features according to claim 2, wherein the edge of the top opening (12) is provided with a limiting groove (121), the first transmission mechanism (22) is adapted to extend into the limiting groove (121), the lid (13) is provided with a limiting part (131) matching the limiting groove (121), when the lid (13) is set on the top opening (12), the limiting part (131) is adapted to engage with the limiting groove (121), and the limiting part (131) is adapted to cooperate with the first transmission mechanism (22).

5. The air fryer with good safety features according to claim 4, wherein the first transmission mechanism (22) including a connecting part (221), one end of the connecting part (221) extends into the limiting groove (121), the other end has a transmission part (2211), the micro-switch component (21) has a transmission groove (211) matching the transmission part (2211), when the lid (13) is set on the top opening (12), the limiting part (131) is pressed down, which can cause the transmission part (2211) of the connecting part (221) to move into the transmission groove (211); when the lid (13) is removed, the limiting part (131) is lifted, which can cause the transmission part (2211) of the connecting part (221) to separate from the transmission groove (211); and
further, wherein the transmission part (2211) has an installation groove (2212), the installation groove (2212) is provided with the second transmission mechanism (23); the transmission groove (211) is provided with a transmission switch (212) corresponding to the second transmission mechanism (23), when the lid (13) is set on the top opening (12) to make the transmission part (2211) of the connecting part (221) move into the transmission groove (211), and the side cover (15) is flipped to close the side opening (14), which can cause the second transmission mechanism (23) to engage with the transmission switch (212) in the transmission groove (211).

6. The air fryer with good safety features according to claim 5, wherein the second transmission mechanism (23) including a transmission rod (231) and an elastic part (232), the elastic part (232) is set between the transmission rod (231) and the installation groove (2212), when the side cover (15) is flipped to close the side opening (14), the elastic part (232) is adapted to be compressed, the transmission rod (231) is adapted to move in the direction of the transmission switch (212).

7. The air fryer with good safety features according to claim 2, wherein the micro-switch component (21) including a first micro-switch component and a second micro-switch component connected in series, the first micro-switch component is adapted to cooperate with the first transmission mechanism (22), the second micro-switch component is adapted to cooperate with the second transmission mechanism (23), when the lid (13) is set on the top opening (12), the first transmission mechanism (22) is adapted to make the first micro-switch component conductive; when the side cover (15) closes the side opening (14), the second transmission mechanism (23) is adapted to make the second micro-switch component conductive.

8. The air fryer with good safety features according to any one of claims 1 to 7, wherein the linkage control system (20) is adapted to be set near the top opening (12) and the side opening (14).

9. The air fryer with good safety features according to any one of claims 1 to 8, wherein the lid (13) and/or the side cover (15) is preferably set to be fully or partially visible.

10. The air fryer with good safety features according to any one of claims 1 to 9, wherein it further including a steam generation system (520) for generating water vapor and introducing it into the cooking cavity (511), the cooking cavity (511) has an air frying system (530) on the outer side of the rear part, the side wall of the cooking cavity (511) near the air frying system (530) is provided with a hot air hole (512), the hot flow generated by the air frying system (530) is suitable for entering and exiting the cooking cavity (511) through the hot air hole (512); the rear part of the cooking cavity (511) is also provided with an exhaust component (540), the exhaust component (540) including an exhaust channel (541), a valve core (542) in the exhaust channel (541), and a drive structure (543) connected to the valve core (542), both ends of the exhaust channel (541) are respectively connected to the cooking cavity (511) and the atmosphere.

11. The air fryer with good safety features according to claim 10, wherein the valve core (542) is preferably made of elastic heat-resistant material, and the cross-sectional shape of the valve core (542) is suitable to match the exhaust channel (541); and
further, wherein the drive structure (543) is adapted to drive the valve core (542) to rotate to close and open at least part of the exhaust channel (541), when the valve core (542) rotates to close the exhaust channel (541), the periphery of the valve core (542) is adapted to overfit with the inner wall of the exhaust channel (541).

12. The air fryer with good safety features according to claim 10, wherein the rear part of the cooking cavity (511) is provided with a hot air cavity (513) connected to it, the air frying system (530) is provided in the hot air cavity (513), the inner wall of the hot air cavity (513) is provided with an exhaust port (514) connected to the exhaust channel (541), the exhaust port (514) is adapted to correspond to at least part of the air frying system (530).

13. The air fryer with good safety features according to claim 10, wherein the drive structure (543) including a drive motor (5431), the inner wall of the exhaust channel (541) is provided with a through first fixing hole (5411), the first fixing hole (5411) is adapted to be opposite the central axis of the exhaust channel (541), the shaft of the drive motor (5431) is adapted to extend into the exhaust channel (541) through the first fixing hole (5411) to be connected with the valve core (542); and
further, wherein the inner wall of the exhaust channel (541) is also provided with a second fixing hole (5412) corresponding to the first fixing hole (5411), the shaft of the drive motor (5431) is adapted to extend into the exhaust channel (541) from the first fixing hole (5411) and connect with the valve core (542), and then extend into the second fixing hole (5412); and
further, wherein the outer end of the shaft of the drive motor (5431) is provided with a sealing ring (544), the shaft of the drive motor (5431) is adapted to be sealed with the first fixing hole (5411) and the second fixing hole (5412) through the sealing ring (544).

14. The air fryer with good safety features according to claim 10, wherein a heat dissipation air duct (515) is provided around the outer side of the cooking cavity (511), and a heat dissipation system (550) for generating a cooling airflow is provided inside the heat dissipation air duct (515), the heat dissipation air duct (515) is provided with an air inlet and an outlet connected to the atmosphere at both ends; and
further, wherein the exhaust component (540) is at least partially located inside the heat dissipation air duct (515) and is set near the heat dissipation system (550).

15. The air fryer with good safety features according to any one of claims 10 to 14, wherein the air fryer has a frying state and a steam cooking state, when the steam generation system (520) is closed and the air frying system (530) is opened, the air fryer is in the frying state, the valve core (542) is adapted to rotate to fully open the exhaust channel (541); when the air frying system (530) is closed and the steam generation system (520) is opened, the air fryer is in the steam cooking state, the valve core (542) is adapted to rotate to close at least part of the exhaust channel (541).
